# EUROPEAN PATENT APPLICATION

(11) **EP 2 919 503 A1**
(43) Date of publication of application: **16.09.2015**
(21) Application number: 15157067.8
(22) Date of filing: 27.02.2015
(51) Int. Cl.: H04W 16/18

(54) **METHOD OF PLACING WIRELESS DEVICES FOR RF PLANNING**

(30) Priority: 11.03.2014 US 201414205109
(71) Applicant: Honeywell International Inc., Morristown, NJ 07962-2245 (US)
(72) Inventor: KAMALAKANNAN, Arunkumar, Morristown, NJ New Jersey 07962-2245 (US)
(74) Representative: Houghton, Mark Phillip

(57) **Abstract**

The method includes showing a site map on a display. The site map displays a first area of a location in which RF devices are to be installed; using an interface UI to select a bounded placement region that is part of the first area; partitioning the bounded placement region; generating an updated site map that identifies locations within the partitioned bounded placement region(s) where RF devices are to be installed within the partitioned bounded placement region; moving one or more of the RF devices on the site map to generate a further updated site map that identifies locations within the partitioned bounded placement region where RF devices are to be installed; adjusting the bounded placement region on the site map to generate a further updated site map that identifies locations within the partitioned bounded placement region where RF devices are to be installed.

## Description

### FIELD OF INVENTION

The present disclosure relates to radio frequency (RF) devices. More particularly, the disclosure relates to a method of placing wireless devices for RF planning.

### BACKGROUND OF THE INVENTION

RF devices are wireless devices that can be installed on or in structures on a site to perform control or monitoring functions. Examples of RF devices include building controllers such as an active controller to permit or deny access through a door, a repeater, a fire alarm, a closed-circuit television monitor or a heating, ventilation and air conditioning controller. Industrial process controllers can also be RF devices.

RF devices can be installed by an RF installer according to a site map showing locations for the RF devices. The map can be generated by an RF device placement tool used by an RF planner who selects locations such that the RF devices may provide sufficient RF coverage and also communicate with each other.

Conventional RF device placement tools often have too many limitations. An RF installer may arrive at a site, such as an industrial plant, with a map prepared by an RF planner that shows locations for the RF devices only to find that one or more of these locations cannot properly support an RF device.

As an example, physical constraints may prevent the installation of an RF device. One example of a physical constraint would be where a wall may be structurally unsound. In addition, an RF device may not be able to be fixed on some industrial structures such as a pipe or a tank. Structures such as cables may also interfere with coverage of an RF device in a particular location.

An RF installer may also have to move an RF device in a working system if there have been structural changes in the site. In these situations, the RF installer must find a new location for the RF device that will provide structural support, sufficient RF coverage and the ability to communicate with other RF devices.

Conventional RF device placement tools do not typically account for several important factors thereby making it more difficult for a wireless system RF planner and RF installer. As an example, an RF installer may need to place the RF devices (might be thousands of RF devices in big sites) manually on the floor or site map and then keep performing RF calculations. Once an RF planner prepares a site that include RF devices marked on the site map, the RF planner must identify where there is a weak link shown on the site map and move RF devices to new locations or add the devices according to the RF coverage needed. In addition, once the RF devices are installed, the RF installer must identify where there is a weak link shown in the map and move RF devices to new locations or add the devices according to the RF coverage needed.

This requirement to move and/or add devices generally consumes a great deal of time and effort for the RF planner and/or RF installer. Manual placement (and often replacement) of RF devices in order to obtain adequate RF coverage often takes more valuable time and may be more prone to human error. Conventional RF device placement tools also often use methods that end up adding more RF devices than is required thereby increasing overall cost.

There is therefore a need for an RF device placement tool that may aid the RF planner in setting more accurate initial locations for RF devices by providing an RF installer with an improved site map that identifies RF device locations. The methods described herein may address these needs

### DETAILED DESCRIPTION OF THE DRAWINGS

FIG. 1 is a flowchart illustrating an example method of placing wireless devices for RF planning.
FIG. 2 is an example site map from an RF device placement tool that may utilize the method of FIG. 1.
FIG. 3 is an example updated site map of FIG. 2 identifying locations within partitioned bounded placement region(s) where RF devices are to be installed.
FIG. 4 is an example site map identifying materials within the partitioned bounded placement region(s).
FIG. 5 is an example updated site map of FIG. 4 identifying locations within partitioned bounded placement region(s) where RF devices are to be installed based on the identified materials.
FIG. 6 is a flowchart illustrating yetanother example method of placing wireless devices for RF planning.
FIG. 7 is a flowchart illustrating another example method of placing wireless devices for RF planning.
FIG. 8 is an RF device placement tool that may utilize any of methods shown in FIGS. 1, 6 and 7.
FIG. 9 is a block diagram of a computer system that can be used to implement the RF device placement tool shown in FIG. 8 and the methods shown in FIGS. 1, 6 and 7.

### DETAILED DESCRIPTION OF THE INVENTION

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

The functions or algorithms described herein may be implemented in software or a combination of software and human implemented procedures in one embodiment. The software may consist of computer executable instructions stored on computer readable media such as memory or other type of storage devices. Further, such functions correspond to modules, which are software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system.

Some of the methods described herein relate to a radio frequency (RF) device placement tool. The radio frequency (RF) device placement tool may define bounded placement regions within an area and then partition the bounded placement regions. The RF device placement tool may be used to facilitate installation of RF devices in the bounded placement regions (e.g., a site such as a building or a plant). The RF device placement tool that uses the methods described herein may be quicker and more accurate in calculating initial RF device placements.

Using the methods described herein may help the RF Planner to more accurately place RF devices on a given site map by initially basing the placement on (i) partitioned boundary regions (i.e., placing RF devices only to areas where the RF installation/planning is required); (ii) identification of materials within a site (materials identification may be based on either manual input or an Auto Tagging solution as described in US 20130185024); and/or (iii) industry specific rules/standards (e.g., fire codes such as, EN-54/UL-864). In addition, the methods described herein may reduce the number of RF devices generated on a site map while still satisfying RF coverage needs by replacing domain specific RF sensors with RF repeaters to reduce cost.

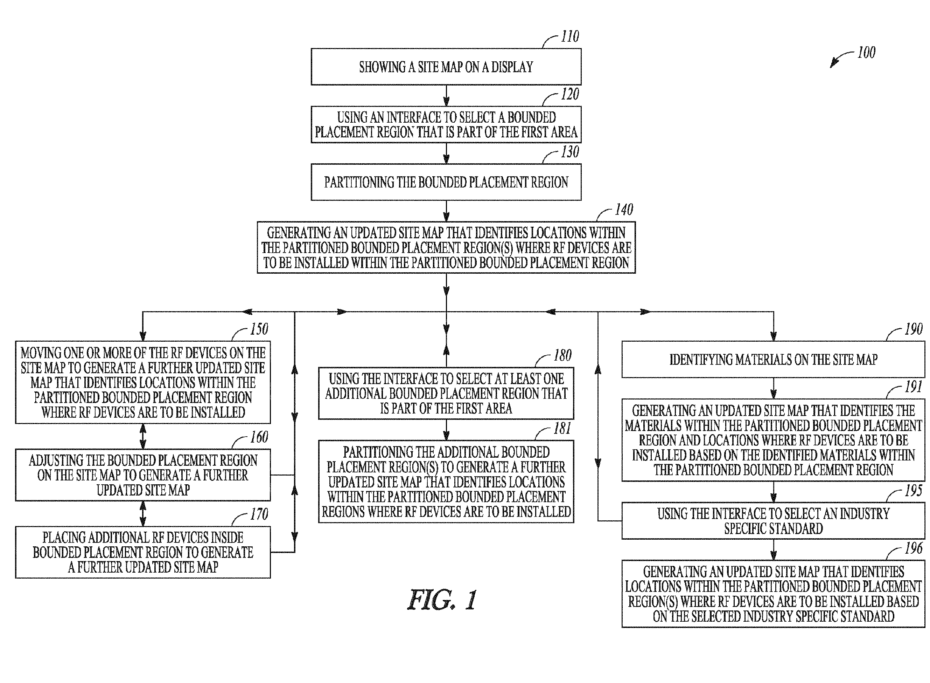

FIG. 1 is a flowchart illustrating a method [100] of placing wireless devices for RF planning. The method [100] includes [110] showing a site map on a display. The site map displays a first area of a location in which RF devices are to be installed.

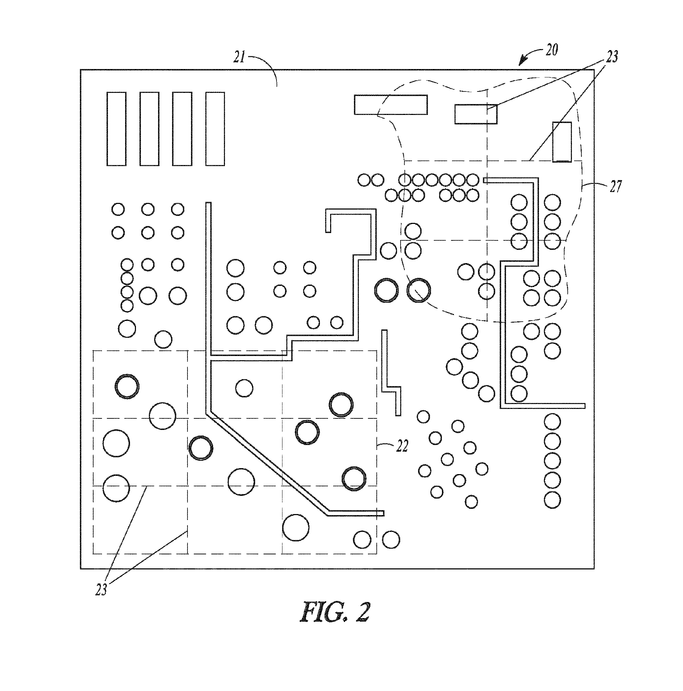

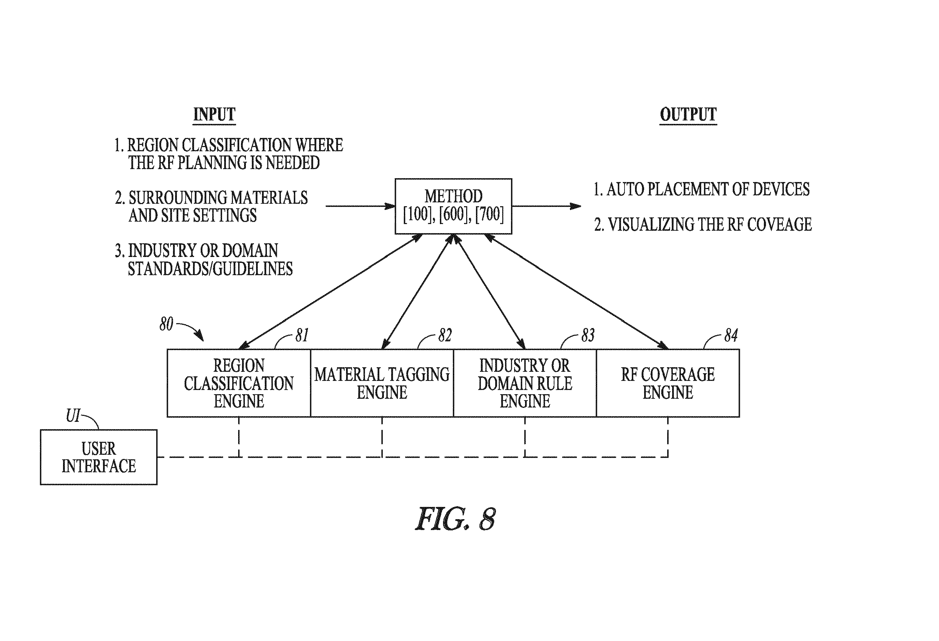

FIG. 2 is an example site map 20 that may be displayed by an RF device placement tool (see, e.g., RF planning tool 80 in FIG. 8) that utilizes the method [100]. The first area 21 on the site map 20 may be a building or an industrial plant with several buildings or pieces of equipment (see, e.g., first area 21 in FIG. 2). The RF devices may be installed inside one or more buildings and/or on the exterior of buildings and/or equipment. As examples, the site map 20 may include a jpeg file or a computer-aided design (CAD) file with pixel data. In some forms, the method [100] may calibrate the site map 20 with real world coordinates to give the map dimensions and locations.

The method [100] further includes [120] using an interface UI to select a bounded placement region 22 that is part of the first area 21. As an example, the RF planning tool 80 may include a Region Classification Engine 81 that identifies the bounded placement region 22 based on user input from the user interface UI.

In some forms, each bounded placement region may be represented in the map by a rectangle, a circle, an ellipse, a polygon or any other two-dimensional geometric figure. The bounded placement regions give an RF installer discrete areas in which the RF devices may be installed to provide sufficient RF coverage.

It should be noted that the height or altitude of an installed RF device may be important in some applications. As an example, a Manual Call Point (MCP) or a card reader may need to be reached by a human user. Other RF devices that talk with the MCP or the card reader may need to be at a similar altitude. The MCP may also trigger a fire alarm when reached by a human user. The method [100] may generate a three-dimensional (3D) view of the site map 20 with 3D bounded placement regions. A 3D bounded placement region requires the RF installer to install the RF device at an altitude that is appropriate for its purpose.

The method [100] further includes [130] partitioning the bounded placement region 22 (see partitions 23 in FIG. 2). Partitioning the bounded placement region 22 may permit a localized approach for placing RF devices 25 within the bounded placement region 22.

The size, shape, arrangement and number of partitions 23 within a bounded placement region 22 may vary depending on the form of the method [100]. In addition, partitioning the bounded placement region 22 may be done in two dimensions or three dimensions depending on whether bounded placement region 22 is in two dimensions or three dimensions.

The partitions 23 may, or may not, be visible to a user. In addition, a user may be able to adjust the manner in which the bounded placement region 22 is partitioned.

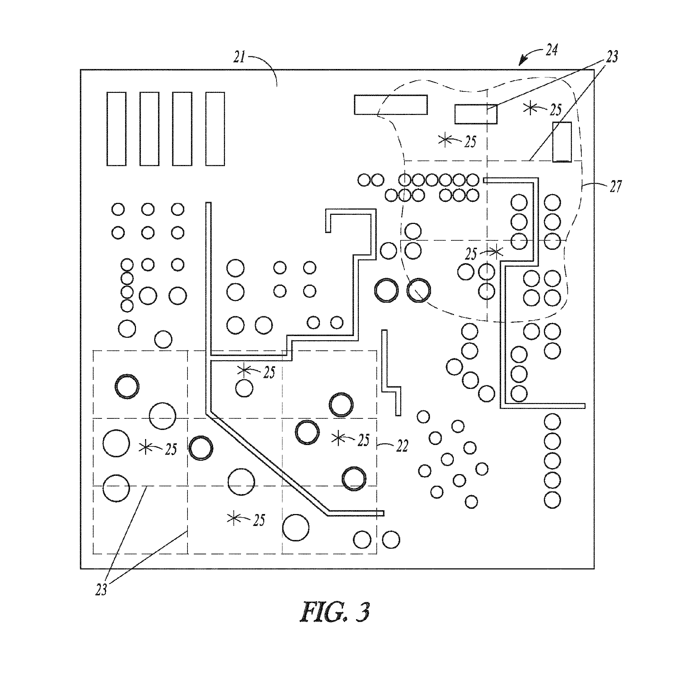

FIG. 3 is an example updated site map 24 identifying locations within partitioned bounded placement region 22 where RF devices 25 are to be installed. The method [100] further includes [140] generating an updated site map 24 that identifies locations within the partitioned bounded placement region(s) 22 where RF devices 25 are to be installed within the partitioned bounded placement region 22. The method [100] performs RF coverage calculations for the RF devices 25 placed on the site map 24. As an example, the RF planning tool 80 may include a RF Coverage Engine 84 that performs RF coverage calculations in order to accurately place the RF devices 25 on the updated site map 24.

The method [100] may generate different RF views of the same site map 24, such as a connectivity view, a coverage view and a heat map view. The connectivity view shows connectivity between the RF devices 25 on the updated map 24. In other words, the connectivity view shows whether two RF devices can communicate with each other or not. The coverage view and the heat map view may show the RF coverage of each of the RF devices 25 on the update site map 24.

If one or more of the RF devices 25 do not provide sufficient RF coverage, the method [100] may further include (i) [150] moving one or more of the RF devices 25 on the site map 24 to generate a further updated site map that identifies locations within the partitioned bounded placement region 22 where RF devices 25 are to be installed; (ii) [160] adjusting the bounded placement region 22 on the site map 24 to generate a further updated site map that identifies locations within the partitioned bounded placement region 22 where RF devices 25 are to be installed; and/or (iii) [170] placing additional RF devices 25 inside bounded placement region 22 to generate a further updated site map that identifies locations within the partitioned bounded placement region where RF devices 25 are to be installed. In some forms, once the method [100] determines that the RF devices 25 placed in the site map 24 provide sufficient RF coverage, the method [100] may end and the site map 24 is supplied to an RF Installer.

The method [100] may further include [180] using the interface UI to select at least one additional bounded placement region (see e.g. region 27 in FIGS. 2 and 3) that is part of the first area 21 and partitioning the additional bounded placement region(s) 27 to generate a further updated site map 24 that identifies locations within the partitioned bounded placement regions 22, 27 where RF devices 25 are to be installed. The number, size and shape of any additional bounded placement region(s) will depend in part on (i) types of structures that are within the first area 21 such as, for example, buildings, walls, pipes, tanks and machines; (ii) the feasibility of installing the RF devices 25 at locations specified on the site map 24; and/or (iii) the desired intensity of RF coverage for the bounded placement region(s) 22, 27 (among other factors).

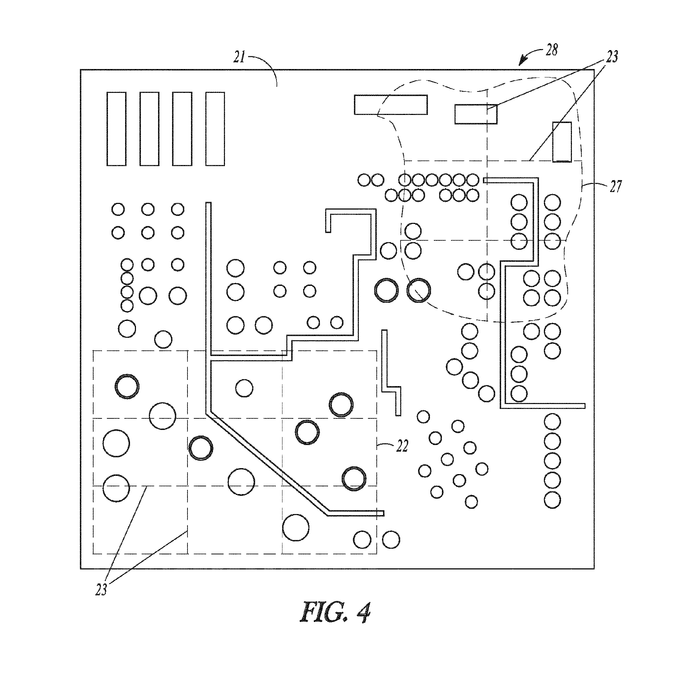

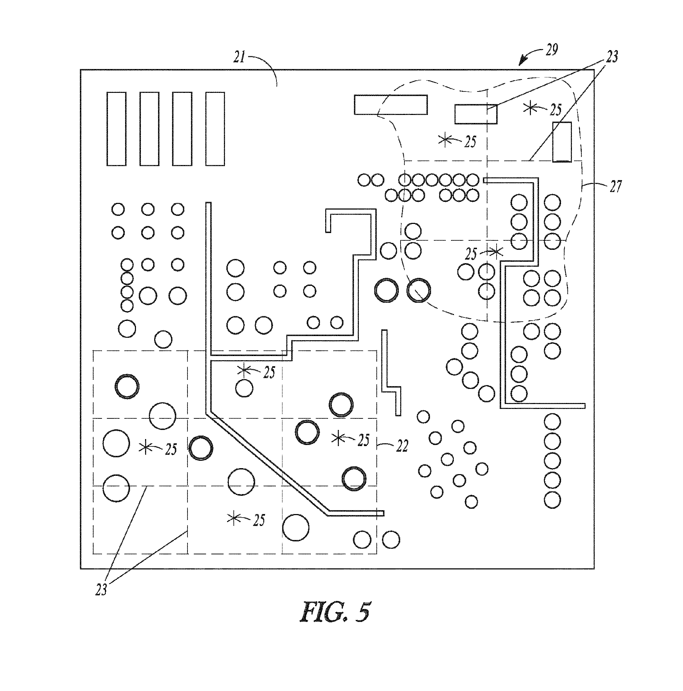

FIG. 4 is an example site map 28 identifying materials within the partitioned bounded placement region(s) 22, 27. FIG. 5 is an example updated site map 29 of the site map 28 shown FIG. 4. The site map 29 identifies locations within partitioned bounded placement region(s) 22, 27 where RF devices 25 are to be installed based on the identified materials.

The method [100] may further include [190] identifying materials on the site map 28 (see FIG. 4) ; and [191] generating an updated site map 29 (see

FIG. 5) that identifies the materials within the partitioned bounded placement region 22 and locations where RF devices 25 are to be installed based on the identified materials within the partitioned bounded placement region 22. The method [100] may decide the number and placement of RF devices 25 that are required for the bounded placement region(s) 22, 27 based on RF impacting factors like material type, thickness, etc. As an example, the RF planning tool 80 may include a Material Tagging Engine 82 that performs RF coverage calculations in order to accurately place the RF devices 25 on the updated site map 29 that are required for the bounded placement region(s) 22, 27 based on RF impacting factors like material type, thickness, etc.

The method [100] may further include [195] using the interface UI to select an industry specific standard; and [196] generating an updated site map 24, 28 that identifies locations within the partitioned bounded placement region(s) 24, 28 where RF devices 25 are to be installed based on the selected industry specific standard. As examples, the method may identify locations for RF devices 25 based on building codes, fire codes (among other types of industry standards/specifications).

As one example, in the case of the fire system industry, ceiling height may determine the type of detector that is to be placed at a particular location. If the ceiling height is more than 10 meters, then a smoke detector may be not recommended since the smoke takes more time to reach the detector and fire would spread more quickly in this instance. As per the standard (EN-54 or UL-864), a different detector should be used in this instance. In addition, every entrance MCP (Manual Call Point), or staircase area MCP, should include fire detectors that are placed every 7 meters.

As another example, in the case of the security system industry, every door at an entrance may need a CCTV camera access reader. It should be noted that security system requirements may vary depending on the level of security that is required based on the type of domain/business. Therefore, the RF device 25 placement must satisfy the RF need as well as the domain/business need.

In some forms, the RF planning tool 80 may include an Industry or Domain Rule Engine 83 that performs RF coverage calculations in order to accurately place the RF devices 25 on the updated site map 24, 29 that are required for the bounded placement region(s) 22, 27 based on satisfying the RF need as well as the domain/business need.

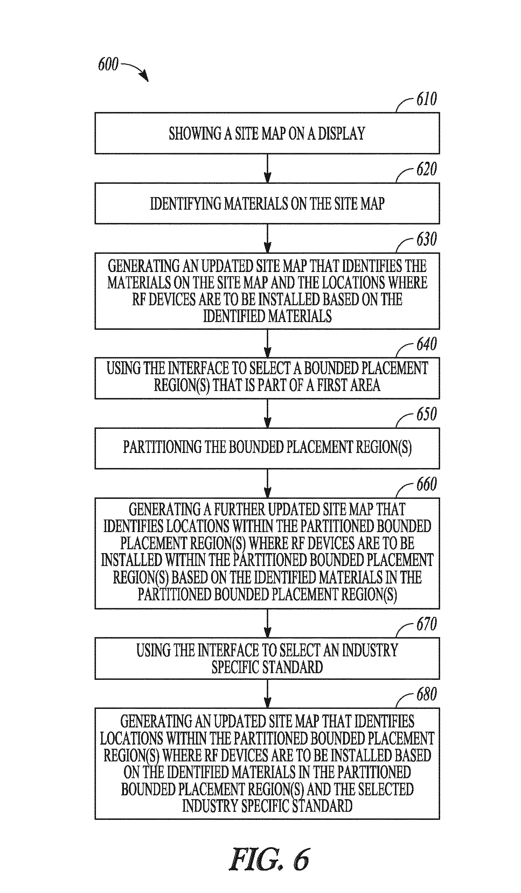

FIG. 6 is a flowchart illustrating a method of placing wireless devices for RF planning. The method [600] includes [610] showing a site map 28 on a display and [620] identifying materials on the site map 28 (see, e.g., FIG. 4).

The method [600] further includes [630] generating an updated site map 29 that identifies the materials on the site map 29 and the locations where RF devices 25 are to be installed based on the identified materials (see, e.g., FIG. 5). As discussed above, the method [600] may decide the number and placement of RF devices 25 that are required for the area 21 based on RF impacting factors like material type, thickness, etc.

In some forms of the method [600], [620] identifying materials on the site map 28 includes using an interface UI to manually identify materials on the site map 28. In other forms of the method [600], [620] identifying materials on the site map 28 includes automatically identifying materials on the site map using an auto tagging solution. An example auto tagging solution is described in US 20130185024.

The method [600] may further include [640] using the interface UI to select a bounded placement region(s) 22, 27 that is part of a first area 21 (as discussed above); [650] partitioning the bounded placement region(s) 22, 27; and [660] generating a further updated site map 29 that identifies locations where RF devices 25 are to be installed within the partitioned bounded placement region(s) 22, 27 based on the identified materials in the partitioned bounded placement region(s) 22, 27 (as discussed above).

The method [600] may further include [670] using the interface UI to select an industry specific standard (as discussed above); and [680] generating an updated site map 29 that identifies locations where RF devices are to be installed based on the identified materials in the partitioned bounded placement region(s) 22, 27 and the selected industry specific standard.

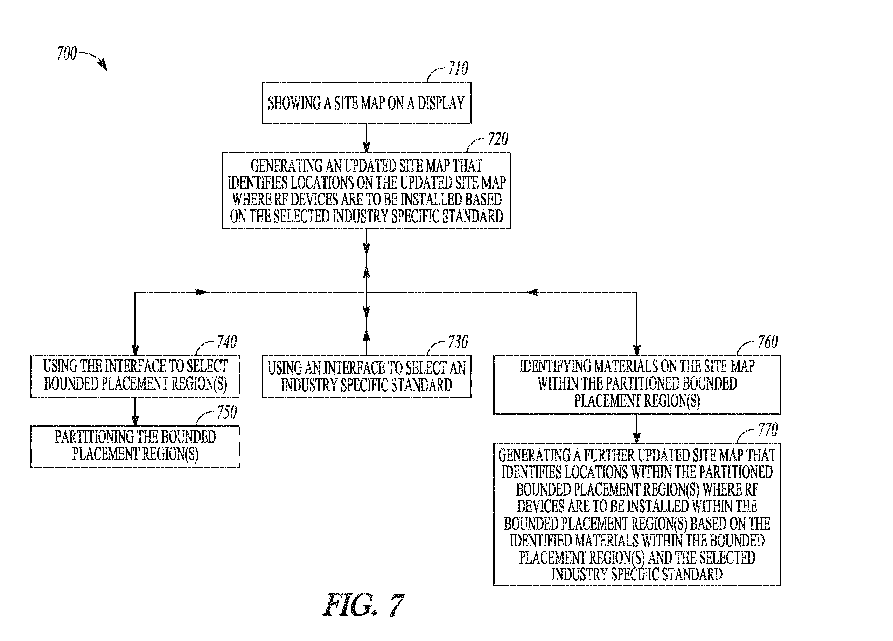

FIG. 7 is a flowchart illustrating a method of placing wireless devices for RF planning. The method [700] includes [710] showing a site map 20, 28 on a display and [720] generating an updated site map 24, 29 that identifies locations on the updated site map 24, 29 where RF devices 25 are to be installed based on the selected industry specific standard (as discussed above).

The method [700] may further include [730] using an interface UI to select an industry specific standard. As an example, [730] using an interface UI to select an industry specific standard may include using an interface UI to select a plurality of industry specific standards. It should be noted that the industry specific standards may reflect standards from different geographic regions. In addition, [720] generating an updated site map 24, 29 may include generating an updated site map 24, 29 that identifies locations on the updated site map 24, 29 where RF devices 25 are to be installed based on the selected industry specific standards.

As discussed above with regard to method [600], the site maps 20, 28 may show a first area 21 such that the method [700] may further include [740] using the interface UI to select bounded placement region(s) 22, 27 that are part of the first area 21. In addition, the method [700] may further include [750] partitioning the bounded placement region(s) 22, 27 and [760] identifying materials on the site map 28 within the partitioned bounded placement region(s) 22, 27. The method [700] may further include [770] generating a further updated site map 24, 29 that identifies locations where RF devices 25 are to be installed within the bounded placement region(s) 22, 27 based on the identified materials within the bounded placement region(s) 22, 27 and the selected industry specific standard.

It should be noted that any of the updated site maps 24, 29 described herein may include connectivity lines (not shown) that illustrate signal strength between the RF devices 25 (e.g., with color). As an example, a white line may indicate good signal strength, and a red line may indicate poor signal strength.

In some forms of the methods [100], [600], [700] described herein, generating an updated site map 24, 29 may include replacing at least one RF sensor on the updated site map 24, 29 with at least one RF repeater. It should be noted that replacing RF sensors with RF repeaters may reduce the cost associated with purchasing and/or installing systems that include RF devices 25. As an example, some industry specific standards may require RF devices to be placed within a certain distance of one another such that RF repeaters may be added in order to meet the industry specific standard.

As discussed above with regard to method [100], if one or more of the RF devices 25 do not provide sufficient RF coverage, any of the methods [100], [600] [700] may further include (i) moving one or more of the RF devices 25 on the updated site map 24, 29 to generate a further updated site map that identifies locations within the partitioned bounded placement region(s) 22, 27 where RF devices 25 are to be installed; (ii) adjusting the bounded placement region(s) 22, 27 on the updated site map 24, 29 to generate a further updated site map that identifies locations within the partitioned bounded placement region(s) 22, 27 where RF devices 25 are to be installed; and/or (iii) placing additional RF devices 25 inside bounded placement region 22 to generate a further updated site map that identifies locations within the partitioned bounded placement region(s) 22, 27 where RF devices 25 are to be installed.

The example methods described herein may improve initial RF device placements on a site map by basing the RF device placements on (i) identifying materials (including type, size, etc.) located on the site map; and/or (ii) Domain/Industry specific recommendations/regulations (e.g., for a targeted wireless network). In some forms, the example methods may additionally (or alternatively) provide a region-based focus by selecting particular regions within an area represented by a site map and then partitioning the selected regions to more accurately provide RF coverage for the selected regions.

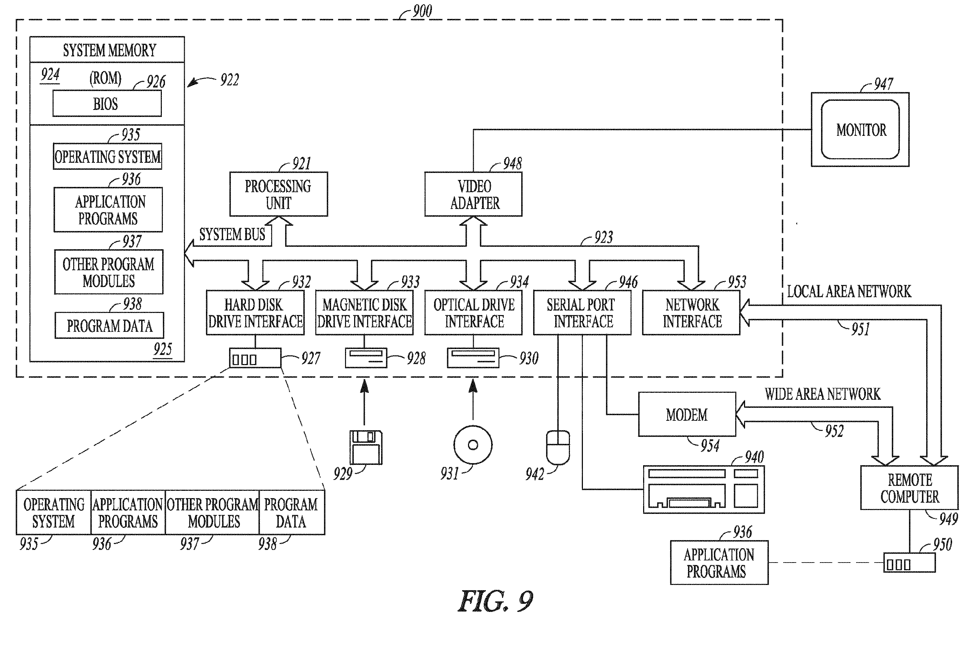

FIG. 9 is a block diagram of a computer system that can be used to implement the RF device placement tool 60 shown in FIG. 6 and the methods [100], [600], [700] shown in FIGS. 1, 6 and 7. In the system shown in FIG. 6, a hardware and operating environment is provided that is applicable to any of the nodes and monitors described in the various embodiments.

As shown in FIG. 9, one embodiment of the hardware and operating environment includes a general purpose computing device in the form of a computer 900 (e.g., a personal computer, workstation, or server), including one or more processing units 921, a system memory 922, and a system bus 923 that operatively couples various system components including the system memory 922 to the processing unit 921. There may be only one or there may be more than one processing unit 921, such that the processor of computer 900 comprises a single central-processing unit (CPU), or a plurality of processing units, commonly referred to as a multiprocessor or parallel-processor environment. In various embodiments, computer 900 is a conventional computer, a distributed computer, or any other type of computer.

The system bus 923 can be any of several types of bus structures including a memory bus or memory controller, a peripheral bus, and a local bus using any of a variety of bus architectures. The system memory can also be referred to as simply the memory, and, in some embodiments, includes read-only memory (ROM) 924 and random-access memory (RAM) 925. A basic input/output system (BIOS) program 926, containing the basic routines that help to transfer information between elements within the computer 900, such as during start-up, may be stored in ROM 924. The computer 900 further includes a hard disk drive 927 for reading from and writing to a hard disk, not shown, a magnetic disk drive 928 for reading from or writing to a removable magnetic disk 929, and an optical disk drive 930 for reading from or writing to a removable optical disk 931 such as a CD ROM or other optical media.

The hard disk drive 927, magnetic disk drive 928, and optical disk drive 930 couple with a hard disk drive interface 932, a magnetic disk drive interface 933, and an optical disk drive interface 934, respectively. The drives and their associated computer-readable media provide nonvolatile storage of computer-readable instructions, data structures, program modules and other data for the computer 900. It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), redundant arrays of independent disks (e.g., RAID storage devices) and the like, can be used in the exemplary operating environment.

A plurality of program modules can be stored on the hard disk, magnetic disk 929, optical disk 931, ROM 924, or RAM 925, including an operating system 935, one or more application programs 936, other program modules 937, and program data 938. Programming for implementing one or more processes or method described herein may be resident on any one or number of these computer-readable media.

A user may enter commands and information into computer 900 through input devices such as a keyboard 940 and pointing device 942. Other input devices (not shown) can include a microphone, joystick, game pad, satellite dish, scanner, or the like. These other input devices are often connected to the processing unit 921 through a serial port interface 946 that is coupled to the system bus 923, but can be connected by other interfaces, such as a parallel port, game port, or a universal serial bus (USB). A monitor 947 or other type of display device can also be connected to the system bus 923 via an interface, such as a video adapter 948. The monitor 947 can display a graphical user interface for the user. In addition to the monitor 947, computers typically include other peripheral output devices (not shown), such as speakers and printers.

The computer 900 may operate in a networked environment using logical connections to one or more remote computers or servers, such as remote computer 949. These logical connections are achieved by a communication device coupled to or a part of the computer 900; the invention is not limited to a particular type of communications device. The remote computer 949 can be another computer, a server, a router, a network PC, a client, a peer device or other common network node, and typically includes many or all of the elements described above I/0 relative to the computer 900, although only a memory storage device 950 has been illustrated. The logical connections depicted in FIG. 9 include a local area network (LAN) 951 and/or a wide area network (WAN) 952. Such networking environments are commonplace in office networks, enterprise-wide computer networks, intranets and the internet, which are all types of networks.

When used in a LAN-networking environment, the computer 900 is connected to the LAN 951 through a network interface or adapter 953, which is one type of communications device. In some embodiments, when used in a WAN-networking environment, the computer 900 typically includes a modem 954 (another type of communications device) or any other type of communications device, e.g., a wireless transceiver, for establishing communications over the wide-area network 952, such as the internet. The modem 954, which may be internal or external, is connected to the system bus 923 via the serial port interface 546. In a networked environment, program modules depicted relative to the computer 900 can be stored in the remote memory storage device 950 of remote computer, or server 949. It is appreciated that the network connections shown are exemplary and other means of, and communications devices for, establishing a communications link between the computers may be used including hybrid fiber-coax connections, T1-T3 lines, DSL's, OC-3 and/or OC-12, TCP/IP, microwave, wireless application protocol, and any other electronic media through any suitable switches, routers, outlets and power lines, as the same are known and understood by one of ordinary skill in the art.

Embodiments of the invention described and claimed herein are not to be limited in scope by the specific embodiments herein disclosed, since these embodiments are intended as illustration of several aspects of the disclosure. Any equivalent embodiments are intended to be within the scope of this disclosure. Indeed, various modifications of the embodiments of the invention in addition to those shown and described herein will become apparent to those skilled in the art from the foregoing description. Such modifications are also intended to fall within the scope of the appended claims.

## Claims

1. A method comprising:
showing a site map on a display, the site map displaying a first area;
using an interface to select a bounded placement region that is part of the first area;
partitioning the bounded placement region; and
generating an updated site map that identifies locations within the partitioned bounded placement region where RF devices are to be installed within the partitioned bounded placement region.

2. The method of claim 1, wherein generating an updated site map that identifies locations within the partitioned bounded placement region where RF devices are to be installed includes identifying locations within a two-dimensional bounded placement region that is selected from the group consisting of a rectangle, a circle, an ellipse and a polygon.

3. The method of claim 1, wherein generating an updated site map that identifies locations within the partitioned bounded placement region where RF devices are to be installed includes identifying locations within a three-dimensional bounded placement region that is selected from the group consisting of a Platonic solid and a sphere.

4. The method of claim 1, further comprising moving one or more of the RF devices on the site map to generate a further updated site map that identifies locations within the partitioned bounded placement region where RF device are to be installed.

5. The method of claim 1, further comprising adjusting the bounded placement region on the site map to generate a further updated site map that identifies locations within the partitioned bounded placement region where RF devices are to be installed.

6. The method of claim 1, further comprising placing additional RF devices inside bounded placement region to generate a further updated site map that identifies locations within the partitioned bounded placement region where RF devices are to be installed.

7. The method of claim 1, further comprising using the interface to select at least one additional bounded placement region that is part of the first area and partitioning the additional bounded placement regions to generate a further updated site map that identifies locations within the partitioned bounded placement regions where RF devices are to be installed.

8. The method of claim 1, further comprising:
identifying materials on the site map; and
generating an updated site map that identifies the materials within the partitioned bounded placement region and locations where RF devices are to be installed based on the identified materials within the partitioned bounded placement region.

9. The method of claim 1, further comprising:
using the interface to select an industry specific standard; and
generating an updated site map that identifies locations within the partitioned bounded placement region where RF devices are to be installed based on the selected industry specific standard.

10. The method of claim 1, wherein generating an updated site map includes replacing at least one RF sensor on the site map with at least one RF repeater to reduce cost.
